(19) 

Europäisches Patentamt

European Patent Office

Office européen des brevets

(11) **EP 4 592 420 A1**

(12) **EUROPEAN PATENT APPLICATION**

(43) Date of publication:
**30.07.2025  Bulletin 2025/31**

(21) Application number: **24153488.2**

(22) Date of filing: **23.01.2024**

(51) International Patent Classification (IPC):
*C22C 38/58* (2006.01)    *C22C 38/02* (2006.01)
*C22C 38/06* (2006.01)    *C22C 38/50* (2006.01)
*C22C 38/46* (2006.01)    *C22C 38/48* (2006.01)
*C22C 38/44* (2006.01)    *C22C 38/42* (2006.01)
*C22C 38/54* (2006.01)    *C22C 38/00* (2006.01)
*C22C 38/38* (2006.01)    *C22C 38/28* (2006.01)
*C22C 38/32* (2006.01)    *C22C 38/20* (2006.01)
*C21D 9/46* (2006.01)    *C21D 8/02* (2006.01)
*C21D 6/00* (2006.01)    *C21D 1/18* (2006.01)
*B32B 15/01* (2006.01)

(52) Cooperative Patent Classification (CPC):
**C22C 38/58; B32B 15/013; C21D 1/18;**
**C21D 6/002; C21D 6/005; C21D 8/0205;**
**C21D 8/0226; C21D 8/0278; C21D 9/46;**
**C22C 38/001; C22C 38/02; C22C 38/06;**
**C22C 38/20; C22C 38/28; C22C 38/32;**      (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **voestalpine Stahl GmbH**
**4020 Linz (AT)**

(72) Inventors:
• KRAMMERBAUER, Johannes
  4493 WOLFERN (AT)
• SPINDLER, Helmut
  3312 OED-ÖHLING (AT)

(74) Representative: **Aera A/S**
**Niels Hemmingsens Gade 10, 5th Floor**
**1153 Copenhagen K (DK)**

(54) **HIGH-STRENGTH HOT-ROLLED STRIP WITH VERY GOOD EDGE FORMABILITY**

(57)    A steel comprising: C 0.02 - 0.12, Si 0.2 - 1.0, Mn 1.5 - 2.5, Al 0.001 - 0.10, Ti 0.01 - 0.12, Cr 0.1 - 1.0, Cu 0.001 - 0.10, B 0.001 - 0.005, Optionally Nb ≤ 0.1, V ≤ 0.1, Ni ≤ 1.0, Mo ≤ 1.0, and Ti + Nb + V 0.02 - 0.15, Cr + Mo+ Ni 0.1 - 1.1, and balance Fe. The microstructure comprising: martensite ≥ 80, lower bainite + tempered martensite ≤ 20, retained austenite ≤ 5, and ferrite, pearlite, upper bainite, cementite ≤ 5, and having the following mechanical properties: TS ≥ 950 MPa, HER ≥ 80 %, Rift 2 - 5, and a having a thickness of 2-5 mm. The invention also refers to a method for producing the hot rolled steel strip or sheet.

**EP 4 592 420 A1**

(52) Cooperative Patent Classification (CPC): (Cont.)
**C22C 38/38; C22C 38/42; C22C 38/44;
C22C 38/46; C22C 38/48; C22C 38/50;
C22C 38/54;** C21D 2211/008

**Description**

TECHNICAL FIELD

The invention relates to a hot rolled steel strip or sheet and manufacturing method thereof.

BACKGROUND ART

Hot rolled complex phase (CP) steels are groups of steel presently used for complex lightweight chassis components in the automotive sector.

A certain thickness, at least above 2 mm, of the steel sheet is required, due to high load from the vehicle weight as well as corrosion tolerances. This makes the preferred manufacturing route hot rolling without subsequent cold rolling. Cold rolling would also increase the cost of the steel.

Examples of complex phase steels are CP800 and CP1000, where the number indicates the tensile strength class. These steels reach the desired tensile strength, but a multiple phase structure can negatively affect the edge formability. Furthermore, steels in these groups having a bainitic microstructure can have a large scattering of the mechanical properties due to sensitivity in the coiling temperature.

EP 2 801 637 B1 disclose a hot rolled sheet and a method for producing the same. The microstructure comprises more than 85 % of tempered martensite, martensite and lower bainite. According to the document this provide an excellent balance between elongation and strength. Some of the examples disclosed in the document have a Tensile strength above 950 MPa and some have a Hole expansion ratio above 80 %. However, none of the examples disclose a steel having a Tensile strength above 950 MPa and a Hole expansion ratio above 80 %.

EP 3 584 337 B1 disclose a high strength hot-rolled sheet and method of producing the same. The microstructure comprises 75-97% upper bainite and 3-25 % of one or two of lower bainite and/or tempered martensite and martensite.

E 2 998 414 B 1 disclose a hot rolled sheet and manufacturing method thereof. The microstructure comprises more than 90 % of tempered martensite and iron-based carbides. WO 2023/132254 A1 disclose a hot rolled steel sheet. The microstructure comprises 95 % or more of martensite and tempered martensite. The steel is produced by cooling from a hot roll finishing temperature FRT of (AC3 +30) °C to 960 °C. One important feature is a bendability Rift of 1.5 or less.

Besides strength, excellent edge formability is a desired property. Furthermore. It is desirable to reach sufficient strength and good edge formability while minimising the amount of expensive alloying elements.

It is therefore an objective to provide a steel that has high strength and good edge formability expressed as Hole expansion ratio - particularly having a Tensile strength $\geq$ 950 MPa, having a Hole expansion ratio ($\lambda$) $\geq$ 80 % and a bendability Rift in the range of 2-5. Another objective is to minimize the amount of expensive alloying elements.

If the strip velocity becomes too high failure rate at coiling can increase. The winding can become too loose, and the coil therefore needs to be scrapped. High strip velocity may also increase the risk of accidental folding of the strip. The strip can be stuck in the plant initiating a complicated removal of the strip. This is costly and also induces risks for the staff removing it. Another objective is to therefore to achieve the desired properties of the steel while at the same time minimizing these risks.

DISCLOSURE OF THE INVENTION

The invention is described in the claims.

In a preferred embodiment the strip or sheet has a composition consisting of the following alloying elements (in wt. %):

| | |
|---|---|
| C | 0.02 - 0.12 |
| Si | 0.2 - 1.0 |
| Mn | 1.5 - 2.5 |
| Al | 0.001 - 0.10 |
| Ti | 0.01 - 0.12 |
| Cr | 0.1 - 1.0 |
| Cu | 0.001 - 0.10 |
| B | 0.001 - 0.005 |
| Optionally | |
| Nb | $\leq$ 0.1 |

(continued)

| | |
|---|---|
| V | ≤ 0.1 |
| Ni | ≤ 1.0 |
| Mo | ≤ 1.0 |

and the sums of Ti + Nb + V and Cr + Mo+ Ni are restricted to:

| | |
|---|---|
| Cr + Mo+ Ni | 0.1 - 1.1 |
| Ti + Nb + V | 0.02 - 0.15 |

balance Fe apart from impurities

The given composition is excluding any optional coatings applied to the strip or sheet.

The importance of the separate elements and their interaction with each other as well as the limitations of the chemical ingredients of the claimed alloy are briefly explained in the following. All percentages for the chemical composition of the steel are given in weight % (wt. %) throughout the description. Upper and lower limits of the individual elements can be freely combined within the limits set out in the claims. The arithmetic precision of the numerical values can be increased by one or two digits for all values given in the present application. Hence, a value of given as e.g., 0.1 % can also be expressed as 0.10 or 0.100 %. The amounts of the microstructural constituents are given in volume % (vol. %).

**C: 0.02 - 0.12 %**

C (carbon) is an element having an action of improving the strength of the steel sheet. When the C content is less than 0.02 %, it is difficult to obtain a martensitic structure. Accordingly, the C content is set to 0.02 %or more. Increasing the C content too much can lead to insufficient ductility, and that the strength becomes too high. Furthermore, iron-based carbides such as cementite ($Fe_3C$) may form. These can be the starting point of cracking in punching operations and can cause deterioration of the stretch flangeability. The upper limit is therefore set to 0.12 %. The lower limit may be set to 0.02, 0.03, or 0.04 %. The upper limit may be set to 0.12, 0.10, 0.09, or 0.08 %. A preferred range is 0.02 - 0.10 %, a more preferred range is 0.03 - 0.09 %.

**Si: 0.2 - 1.0 %**

Si (silicon) is an element having an action of improving the strength of the steel sheet, but also functions as a deoxidizer in the steel melt. Silicon helps inhibit the formation of iron-based carbides including cementite. Therefore, a lower limit is set to 0.2 %. Higher amount of Si may also be beneficial for elongation due to the inhibition of iron-based carbides including cementite. On the other hand, Si raises the Ac3-temperature and can negatively affect the surface properties by formation of fayalite-scale. The upper limit is therefore set to 1.0 %. The lower limit may be set to 0.2, 0.3, 0.4, or 0.5 %. The upper limit may be set to 1.0, 0.9, or 0.8 %. A preferred range is 0.3 - 1.0 %, a more preferred range is 0.4 - 0.9 %.

**Mn: 1.5 - 2.5 %**

Mn (manganese) improves the strength of the steel sheet through solid-solution strengthening and quench-hardening. Further, increasing Mn can expand the austenite temperature region at the lower temperature side. This improves hardenability and facilitates the formation of a low temperature transformation structure having an excellent burring property, such as martensite or lower bainite. The excellent burring property can be seen by improved Hole Expansion Ratio's. Therefore, a lower limit is set to 1.5 %. Above 2.5 % the effect of improving the strength of the steel sheet is saturated. The upper limit is therefore set to 2.5 %. The lower limit may be set to 1.5, 1.6, 1.7, or 1.8 %. The upper limit may be set to 2.5, 2.4, 2.3, 2.2. or 2.1 %. A preferred range is 1.6 - 2.4 %, a more preferred range is 1.7 - 2.2 %.

**Al: 0.001 - 0.10 %**

Al (aluminium) has an action of deoxidizing molten steel in a refining process of the steel to sound the steel. Al further has, similarly to Si, an action of suppressing the precipitation of the iron-based carbides such as cementite and thereby improving the strength and Hole expansion ratio. An upper limit of 0.1 % is set to suppress the generation of a non-metallic inclusion in the steel thereby improving the ductility and the low-temperature toughness. The lower limit may be set to 0.001, 0.005, or 0.01 %. The upper limit may be set to 0.10, 0.05, or 0.01 %. A preferred range is 0.001 - 0.10 %.

**Ti: 0.01 - 0.12 %**

Ti (titanium) can improve the strength of the steel sheet by precipitation strengthening or solid-solution strengthening. Ti is added to bind nitrogen by forming titanium nitrides. By binding nitrogen, boron is hindered from the formation of boron nitride. Ti is therefore preferably added close to stoichiometric ratio relative N to protect the steel from the formation of boron nitride. Furthermore, the addition of Ti can lead to a finer initial structure (the prior austenite grain size). A finer prior austenite grain size can increase the elongation at fracture and the Hole expansion ratio. However, too much Ti can cause coarse titanium nitrides, which are bad for the Hole expansion ratio. The lower limit may be set to 0.01 or 0.02 %. The upper limit may be set to 0.12, 0.11, 0.10, 0.09, 0.08, 0.07, 0.06, 0.05 or 0.04 %. A preferred range is 0.02 - 0.10 %. A more preferred range is 0.02 - 0.05 %.

**Cr: 0.1-1.0 %**

Cr(chromium), Mo (molybdenum) and Ni (nickel) can improve the strength of the steel sheet by solid-solution strengthening or quench-hardening strengthening. Cr, Mo, and Ni affect the Ac3 temperature, and they also promote transformation behaviour, and facilitate obtaining a martensitic microstructure. Too much of Cr, Mo, and Ni can affect the Hole expansion ratio and the forming properties negatively.

Without Cr, cooling from the Finish Rolling Temperature (FRT) will be more difficult. Therefore, according to the invention Cr is mandatory, whereas Mo and Ni are optional elements. The lower limit of Cr should be at least 0.1 % and the upper limit at most 1.0 %. The lower limit of Cr can be set to 0.1, 0.15, 0.2, 0.25 or 0.3 %. The upper limit of Cr can be set to 1.0, 0.9, 0.8, 0.7, 0.6, 0.5 or 0.4 %.

**B: 0.001 - 0.005 %**

B (boron) is important to ensure hardenability, therefore a minimum amount of 0.001 % is necessary to achieve complete martensite formation after hot rolling by suppressing ferrite formation. (B segregates at the austenite grain boundaries and reduces the number of possible nucleation sites for ferrite there. However, excessive amounts of B can deteriorate the workability and can make scrap recycling more difficult. The maximum amount is therefore set to 0.005%. The lower limit can be set to 0.001, or 0.002 %. The upper Limit can be set to 0.005 or 0.004 %. A preferred range is 0.001 - 0.004 %. A more preferred range is 0.002 - 0.004 %.

**Cu 0.001 - 0.10 %**

Cu (copper) improves scale removal and thus has an influence on a better surface quality. The lower limit is therefore 0.001 %. The lower limit may be set to 0.001 0.005, 0.010, or 0.050 %. The upper limit may be set to 0.10 %.

Optional elements

**Nb: ≤ 0.10 %**

Nb(niobium) improves the strength of the steel sheet by precipitation strengthening or solid-solution strengthening. Furthermore, the addition of Nb can lead to a finer initial structure (the prior austenite grain size). A finer prior austenite grain size can increase the elongation at fracture and the Hole expansion ratio. However, too much Nb can lead to strong pancaking of any austenite present due to an increase in recrystallisation stop temperature. And further, too high Nb may increase the number of nucleation sites for phase transformation which promotes the formation of ferrite, and thereby lowers the hardenability. The upper limit may be set to 0.10, 0.09, 0.08, 0.07, 0.06, 0.05, 0.04, 0.03, 0.02, 0.01, or 0.005 %. The lower limit may be set to 0.0001 or 0.001 %. A deliberate addition of Nb is not necessary according to the present invention.

**V: ≤ 0.10 %**

V (vanadium) improves the strength of the steel sheet by precipitation strengthening or solid-solution strengthening. The upper limit may be set to 0.10, 0.09, 0.08, 0.07, 0.06, 0.05, 0.04, 0.03, 0.02, 0.01, or 0.005 %. The lower limit may be set to 0.0001 or 0.001 %. A deliberate addition V is not necessary according to the present invention.

**Ni ≤ 1.0%**

**Mo ≤ 1.0%**

Ni and/or Mo may be added to improve the strength of the steel sheet by solid-solution strengthening or quench-hardening strengthening. Ni/Mo affect the Ac3 temperature, promote transformation behaviour, and facilitate obtaining a martensitic microstructure. Too much Mo may lead to pancaking. Mo and Ni are expensive elements and are therefore desirable to be kept at a minimum. The upper limit of each of Mo and Ni may be restricted to 1.0, 0.8. 0.6, 0.4, 0.2, 0.1, 0.05, or 0.01 %. The lowest amount of each of Mo and Ni may be set to 0.001, 0.005, 0.01, 0.02, 0.03, 0.04 or 0.05 %. A deliberate addition of Mo and/or Ni is not necessary according to the present invention.

Further preferred restrictions

**Cr + Mo + Ni: 0.10 - 1.1 %**

The combined content should be at least 0.1 %. However, to ensure a >95% martensitic microstructure a minimum lower limit of 0.2 % is required. Too much of Cr, Mo, and Ni can negatively affect the Hole expansion ratio as well as the forming properties. The combined content should therefore be at most 1.0 %.
The lower limit of Cr+ Mo+ Ni can be set to 0.1, 0.2, or 0.3 %. The upper limit of Cr+ Mo+ Ni can be set to 1.1, 1.0, 0.9, 0.8, 0.7, 0.6, 0.5 or 0.4 %. A preferred range is 0.1 - 0.75 %. A more preferred range is 0.2 - 0.7 %.

**Ti + Nb + V: 0.02 - 0.15 %**

The combined content of Ti, Nb and V should preferably be in the range of 0.02 - 0.15 %. A more preferred range is 0.02 - 0.13 %. A most preferred range is 0.02 - 0.10 %.

Impurities

The following impurities may optionally be limited as disclosed below.

**Ca: ≤ 0.05 %**

Ca could be used for the modification of the non-metallic inclusions. The upper limit is 0.05% and may be set to 0.04, 0.03, 0.01, or 0.005 %. A deliberate addition of Ca is not necessary according to the present invention.

**P: < 0.10 %**

P (phosphorus) is an element generally contained as an impurity. When the P content is more than 0.10 %, P causes cracking in the hot rolling, and is segregated at a grain boundary to decrease the low-temperature toughness and also decrease the workability and the weldability. Therefore, the P content is set to 0.10 % or less. The upper limit may be set to 0.10, 0.05, 0.04, 0.03 or 0.02 %

**S: < 0.010 %**

S (sulfur) is an element generally contained as an impurity. When the S content is more than 0.010%, S causes cracking in the hot rolling, and can generate MnS inclusions in the steel which deteriorates the Hole expansion ratio. Therefore, the S content is set to 0.010 or less. The upper limit may be set to 0.010, 0.05, 0.03, 0.01, 0.005 or 0.001 %

**N: < 0.01 %**

N (nitrogen) is an element generally contained as an impurity. When the N content is more than 0.01 %, N causes cracking in the hot rolling, and deteriorates the aging resistance. Therefore, the N content is set to 0.01 % or less. A nominal amount may be in the range of 0.001 - 0.008 %.
Other impurity elements may be comprised in the steel in normal occurring amounts. However, it is preferred to limit the amounts of As, Zr, Sn to the following optional maximum contents:

As: ≤ 0.020, or ≤ 0.010%
Zr: ≤ 0.010, or ≤ 0.006%
Sn: ≤ 0.030, or ≤ 0.015%

Oxygen and hydrogen can further be limited to

O: $\leq 0.001$, or $\leq 0.0003\%$
H: $\leq 0.0050$, or $\leq 0.0020\%$

Mechanical properties

The steel should fulfil the following conditions:

| | |
|---|---|
| TS, Tensile strength ($R_m$) | $\geq 950$ MPa, preferably 1000 - 1140 MPa |
| HER, Hole expansion ratio ($\lambda$) | $\geq 80\ \%$, preferably $\geq 100\ \%$ |

And optionally one or more of the following mechanical properties:

| | |
|---|---|
| YS, Yield strength ($R_{p0.2}$) | 700 - 1000 MPa, preferably 780-980 MPa |
| TE, Total elongation for t < 3 mm ($A_{80mm}$) | $\geq 4\ \%$, preferably $\geq 5\ \%$ |
| for t $\geq$ 3mm ($A_5$) | $\geq 8\ \%$, preferably $\geq 9\ \%$ |

Preferably, all these requirements are fulfilled at the same time.

TS, YS, TE are examples of properties related global ductility. HER is a property related to local ductility.

The $R_m$, $R_{p0.2}$ values are derived in accordance with the Industrial Standard DIN EN ISO 6892-1:2019, wherein the samples with a gauge length of 80 mm are taken in the longitudinal direction of the strip.

The Total Elongation is determined according to EN10149-2 2013 (D). For sheet thickness t <3mm, $A_{80mm}$ used, and from t $\geq$3mm $A_5$ (proportional measuring length related to the sample cross-section) is used.

The Hole expansion ratio ($\lambda$) is determined by the Hole expansion test according to ISO 16630:2017. In this test a conical punch having an apex of 60 ° is forced into a 10 mm diameter punched hole made in a steel sheet having the size of 100 x 100 mm$^2$. The test is stopped as soon as the first crack is determined, and the hole diameter is measured in two directions orthogonal to each other. The arithmetic mean value is used for the calculation.

The Hole expansion ratio ($\lambda$) in % is calculated as follows:

$$\lambda = (Dh - Do)/Do \times 100$$

wherein Do is the diameter of the hole at the beginning (10 mm) and Dh is the diameter of the hole after the test.

The bendability is evaluated by the ratio of the limiting bending radius (Ri), which is defined as the minimum bending radius with no occurrence of cracks, and the sheet thickness, (t). For this purpose, a 90° V-shaped block is used to bend the steel sheet in accordance with JIS Z2248. The value obtained by dividing the limit bending radius with the thickness (Rift) should be in the range of 2 - 5, preferably 2-4. The bendability is balanced to achieve the other desired mechanical properties.

The strip or sheet thickness of the final product is 2 - 5 mm, preferably 2.5 - 4 mm, more preferably 3-4 mm. The strip or sheet width may be 500 - 2000 mm, preferably 700 - 1750 mm in non-slit condition.

Microstructure

The microstructural constituents are in the following expressed in volume % (vol. %).

| | |
|---|---|
| Martensite | $\geq 80$ |
| lower bainite + tempered martensite | $\leq 20$ |
| retained austenite | $\leq 5$ |
| ferrite, pearlite, upper bainite, cementite | $\leq 5$ |

Each of the phases or combinations of phases in the list above may balance the microstructure.

Martensite should be at least 80 %. The lower limit may be set to 80, 85, 90, 91, 92, 93, 94, 95, 96, 97, 98, 99, or 100 %.

The steel may contain lower bainite and/or tempered martensite up to 20 %. The tempered martensite can be formed by self-tempering during the cooling process. The upper limit may be 20, 15, 10, 8, 6, 4, 2, or 0 %. The microstructure may be free of lower bainite and/or tempered martensite.

The steel contains small amounts retained austenite. The upper limit may be 5, 4, 3, 2, or 1%. The lower limit may be set to 0.5, 1,0, 1.5 or 2.0 %.

The steel may contain small amounts of pearlite, and/or iron-based carbides including cementite, and/or upper bainite and/or ferrite. The upper limit may be 5, 4, 3, 2, 1, or 0 %. The microstructure may be free of pearlite, and/or iron-based carbides including cementite, and/or upper bainite and/or ferrite.

The steel is preferably free of MnS inclusions. The steel is preferably free of any iron-based carbides including cementite.

The microstructure, including the amount of each phase, can be identified in scanning electron microscope (SEM) using 20000 times magnification. Preferably by cutting out a sample from a steel plate and polishing a cross section of a plate parallel to the rolling direction. The microstructure should be taken from ¼ of the thickness. The surface can be etched to make the phases easier to identify.

However, any amount of retained austenite is preferably determined by means of the saturation magnetization method described in detail in Proc. Int. Conf. on TRIP-aided high strength ferrous alloys (2002), Ghent, Belgium, p. 61 - 64.

Production of the coiled strip.

The coiled strip can be produced by the following steps:

a) making steel slabs with the composition defined above. The steel slabs may e.g. be produced by converter melting or in an electric steel plant and secondary metallurgy to finalise the composition

b) Reheating the slabs to a reheating temperature **TRH** between 1200 °C and 1300 °C at a heating rate of 0.05 - 10 °C/s;

c) Hot rolling the slabs in austenitic range to a hot rolled strip. The hot rolling may include:

i) rough rolling to a thickness less than 50 mm,

ii) finishing rolling to a final thickness **t** (2-5 mm), wherein the hot rolling finishing temperature **FRT** is within the range of 850 to 900 °C;

d) Cooling the hot rolled strip at cooling rate **CR** of at least 55 °C/s down to a cooling stop temperature lower than 200 °C;

e) Coiling the cooled strip at a coiling temperature **CT** lower than 200 °C;

f) Optionally electrogalvanizing the strip.

Galvannealing or hot dip galvanizing is not an option for this steel since it will affect the microstructure in a non-desired way.

The upper limit of the hot rolling finishing temperature **FRT** could be restricted to 900, 890, 880, or 875 °C. The lower limit could be restricted to 850, 860 or 865 °C. A lower hot rolling finishing temperature **FRT** gives a finer grain size of the microstructure which result in an increased Hole expansion ratio ($\lambda$). The hot rolling finishing temperature **FRT** is preferably less than Ac3 + 30 °C, more preferably less than Ac3 + 20 °C, most preferably less than Ac3 + 10 °C, when calculating Ac3 as: Ac3 = 937.2 - 436.5 x C + 56 x Si - 19.7 x Mn - 16.3 x Cu - 26.6 x Ni - 4.9 x Cr + 124.8 x V + 136.3 x Ti - 19.1 x Nb + 198.4 x Al + 3315 x B. Each of the elements in weight %.

By lowering the hot rolling finishing temperature **FRT** the cooling process is made easier. The exit velocity of the strip is reduced by increasing the required temperature drop between the entry temperature of finish rolling and the finish rolling temperature FRT. This makes coiling easier since the strip is moving slower and makes the entire process safer and more reliable due to lower required strip speed.

However, starting the cooling from a lower hot rolling finishing temperature **FRT** makes it more difficult to obtain a martensitic microstructure. Therefore, to obtain the desired martensitic microstructure the cooling rate **CR** should be at least 55 °C/s, preferably at least 60 °C/s, more preferably at least 70 °C/s. The start of cooling is preferably within 5 seconds, more preferably within 3 seconds, from exiting the last roller pair of the finish rolling. The cooling is preferably done by laminar water cooling. The lower limit of the cooling rate **CR** may be further increased to 80 °C/s or 90 °C/s. An upper limit is not necessary but can be set to 150 °C/s or 200 °C/s. Higher cooling rates can further refine the grain structure of the martensite, further benefitting an increased Hole expansion ratio ($\lambda$).

To reach the desired amount of martensite, the cooling should be made down to a cooling stop temperature lower than 200 °C, preferably lower than 100 °C. A lower cooling stop temperature further benefits a uniform strength profile. I.e., less variation on the Tensile strength along the surface of the sheet.

After cooling the strip is coiled. The coiling temperature **CT** is lower than 200 °C, preferably lower than 100 °C. The cooling stop temperature and the coiling temperature can be the same. A lower limit of the cooling stop temperature and/or the coiling temperature may be set to around room temperature (25 °C).

The combination of the hot rolling finishing temperature **FRT,** the cooling rate **CR,** and the coiling temp **CT** makes it possible to achieve the desired properties of the steel given the carefully selected composition.

The steel is not subjected to cold rolling or further heat treatment steps that affect the microstructure.

EXAMPLES

Steel slabs were produced by conventional metallurgy by converter melting and secondary metallurgy. The compositions of the produced steels **A** - **D** are shown in Table. 1. Steel compositions **A** - **C** are within the boundaries according to the invention. None of the impurities of steels **A** - **D** were above the lowest upper limits specified in the description. Steel **D** differ in a higher carbon content and a lower boron content.

Table 1

| Steel | C | Si | Mn | Al | Ti | V | Nb | Cr | Mo | Ni | Cu | B | N |
|---|---|---|---|---|---|---|---|---|---|---|---|---|---|
| A | 0.046 | 0.79 | 1.99 | 0.057 | 0.028 | 0.004 | 0.002 | 0.34 | 0.007 | 0.012 | 0.091 | 0.0022 | 0.0048 |
| B | 0.045 | 0.58 | 2.02 | 0.05 | 0.027 | 0.004 | 0.002 | 0.32 | 0.023 | 0.13 | 0.079 | 0.0025 | 0.0061 |
| C | 0.044 | 0.20 | 1.74 | 0.043 | 0.026 | 0.005 | 0.002 | 0.26 | 0.029 | 0.14 | 0.079 | 0.0023 | 0.0048 |
| D | <u>0.131</u> | 0.58 | 1.96 | 0.053 | 0.097 | 0.007 | 0.003 | 0.32 | 0.109 | 0.094 | 0.077 | 0.0002 | 0.0054 |
| *Underlined values are outside the scope of the invention.* | | | | | | | | | | | | | |

Seven samples were produced from the steels **A- D.** Process values are shown in Table 2. The samples **#1-7** were reheated to a reheating temperature **TRH** at a heating rate of about 0.1 °C/s. The reheated samples where thereafter hot rolled in austenitic range to a hot rolled strip. The hot rolling included:

    i) rough rolling to a thickness less than 50 mm, and
    ii) finishing rolling to a final thickness **t.**

The hot rolling finishing temperature **FRT** was around 870 °C for all but sample **#7** which had a finishing temperature **FRT** of 896 °C.

The hot rolled strip were thereafter cooled at a cooling rate **CR** down to a cooling stop temperature **CS,** which was the same as the coiling temperature **CT.** The strips were thereafter coiled at the coiling temperature **CT.**

Table 2

| | | Process values | | | | | |
|---|---|---|---|---|---|---|---|
| Steel | # | TRH [°C] | FRT [°C] | CS/CT [°C] | CR [°C/s] | t [mm] | Inv./ Comp. |
| A | 1 | 1245 | 871 | <100 | 99.6 | 2.5 | Inv. |
| A | 2 | 1245 | 870 | <100 | 88.0 | 4 | Inv. |
| B | 3 | 1246 | 872 | <100 | 93.2 | 2.9 | Inv. |
| C | 4 | 1247 | 868 | <100 | 63.2 | 4 | Inv. |
| C | 5 | 1265 | 870 | <100 | 60.2 | 2.5 | Inv. |
| C | 6 | 1241 | 870 | <100 | <u>48.9</u> | 2.5 | Comp. |
| D | 7 | 1236 | 896 | <u>~500</u> | <u>43.6</u> | 3 | Comp. |
| *Underlined values are outside the scope of the invention.* | | | | | | | |

The mechanical properties of the samples **#1-7** were thereafter determined using the measurement methods defined in the description. Mechanical properties are shown in Table 3. As can be seen, sample **#1-5** met all mechanical criterions, particular in having a Tensile strength **TS** above 950 MPa while having a Hole expansion ratio **HER** above 80 %. In fact, all inventive samples reached a Hole expansion ratio **HER** above 100 %. The inventive samples **#1-3** of steel **A** and **B** reached a tensile strength **TS** well above 1000 MPa. Samples **#1-6** all had a bendability **Rift** within 2- 5.

Sample **#6,** which was based on steel **C** and within the compositional boundaries defined by claim 1, failed to meet the desired tensile strength **TS** and comprised only 22% martensite. Sample **#4** and **#5** of the same steel **C,** on the other hand, met the desired tensile strength **TS** and comprised more than 80 vol.% martensite. Moreover, when comparing sample **#5** to sample **#6,** both having the same sheet thickness **t,** it can be seen that the inventive sample **#5** has considerably higher **HER** than sample **#6.** The difference in Tensile strength **TS,** Hole expansion ratio **HER** and microstructure is caused by the difference in cooling rate **CR;** which was above 60 °C/s for sample **#4** and **#5,** whereas the non-inventive sample **#6** had a cooling rate of 48.9 °C/s. Based on the values of Table 2-4, the lower limit of the cooling rate **CR** was set to be at least 55°C/s, preferably at least 60 °C/s, more preferably at least 70 °C/s.

Sample **#7** made from steel **D** reached the desired Tensile strength but had a Hole Expansion ratio of only 28 %. Sample #8 had a higher carbon content and a cooling rate and cooling stop and coiling temperature outside the scope of the invention. This led to a much lower Hole expansion ratio **HER** of only 28 %.

Table 3

| | | Mechanical properties | | | | | | |
|---|---|---|---|---|---|---|---|---|
| **Steel** | **#** | **YS [Mpa]** | **TS [Mpa]** | **A80 [%]** | **A5 [%]** | **HER [%]** | **Rift** | **Inv./ Comp.** |
| **A** | **1** | 944 | 1075 | 6 | | 119 | 2.6 | Inv. |
| **A** | **2** | 879 | 1041 | | 11.9 | 112 | 3.0 | Inv. |
| **B** | **3** | 953 | 1054 | 6.4 | | 124 | 2.8 | Inv. |
| **C** | **4** | 928 | 977 | | 9.4 | 114 | 2.5 | Inv. |
| **C** | **5** | 856 | 953 | 6.3 | | 130 | 2.8 | Inv. |
| **C** | **6** | 748 | <u>864</u> | 8.4 | | 106 | 2.4 | Comp. |
| **D** | **7** | 776 | 1019 | | 15.3 | <u>28</u> | <u>1.7</u> | Comp. |
| *Underlined values are outside the scope of the invention.* | | | | | | | | |

The microstructures of the samples were evaluated according to the methods previously described in the description. The results are presented in Table 4. As can be seen, the inventive samples **#1-5** fulfilled the requirements on the microstructure, whereas sample **#6** and **#7** failed to meet them.

Table 4

| **Steel** | **#** | **Martensite** | **Lower bainite + Tempered martensite** | **Retained austenite** | **Ferrite + Pearlite + Upper bainite + Cementite** |
|---|---|---|---|---|---|
| **A** | #1 | 98 | - | 2 | - |
| **A** | #2 | 97 | - | 3 | - |
| **B** | #3 | 97 | - | 3 | - |
| **C** | #4 | 87 | 11 | 2 | - |
| **C** | #5 | 83 | 15 | 2 | - |
| **C** | #6 | <u>22</u> | <u>75</u> | 3 | - |
| **D** | #7 | <u>7</u> | <u>24</u> | 5 | <u>64</u> |
| *Underlined values are outside the scope of the invention.* | | | | | |

**Claims**

**1.**  A hot rolled steel strip or sheet having a composition consisting of the following alloying elements (in wt. %):

| | |
|---|---|
| C | 0.02 - 0.12 |
| Si | 0.2 - 1.0 |
| Mn | 1.5 - 2.5 |

(continued)

| | |
|---|---|
| Al | 0.001 - 0.10 |
| Ti | 0.01 - 0.12 |
| Cr | 0.1 - 1.0 |
| Cu | 0.001 - 0.10 |
| B | 0.001 - 0.005 |
| Optionally | |
| Nb | $\leq 0.1$ |
| V | $\leq 0.1$ |
| Ni | $\leq 1.0$ |
| Mo | $\leq 1.0$ |

and the sums of Ti + Nb + V and Cr + Mo+ Ni are restricted to:

| | |
|---|---|
| Ti + Nb + V | 0.02 - 0.15 |
| Cr + Mo+ Ni | 0.1 - 1.1 |

balance Fe apart from impurities,

and having microstructure comprising (in vol. %):

| | |
|---|---|
| martensite | $\geq 80$ |
| lower bainite + tempered martensite | $\leq 20$ |
| retained austenite | $\leq 5$ |
| ferrite, pearlite, upper bainite, cementite | $\leq 5$ |

and having the following mechanical properties:

| | |
|---|---|
| TS, Tensile strength ($R_m$) | $\geq 950$ MPa |
| HER, Hole expansion ratio ($\lambda$) | $\geq 80$ %, |
| bendability (Rift) | 2 - 5 |

and a having a thickness of 2-5 mm,
and the Hole expansion ratio ($\lambda$) is determined by the Hole expansion test according to ISO 16630:2017,
and the bendability (Rift) is determined in accordance with JIS Z2248,
and the amount of retained austenite is determined by means of the saturation magnetization method described in detail in Proc. Int. Conf. on TRIP-aided high strength ferrous alloys (2002), Ghent, Belgium, p. 61-64, and the other phases are determined by use of scanning electron microscope (SEM) at 20000 times magnification, and the tensile strength is determined in accordance with the Industrial Standard DIN EN ISO 6892-1:2019 in which samples with a gauge length of 80 mm are taken in the longitudinal direction of the strip or sheet.

2. The hot rolled steel strip or sheet having a composition consisting of the following alloying elements (in wt. %):

| | |
|---|---|
| C | 0.02 - 0.10 |
| Si | 0.3 - 1.0 |
| Mn | 1.6 - 2.4 |
| Al | 0.001 - 0.10 |
| Ti | 0.02 - 0.05 |
| Cr | 0.1 - 0.7 |
| Cu | 0.001 - 0.10 |
| B | 0.001 - 0.004 |

Optionally

| Nb | ≤ 0.1 |
|----|-------|
| V | ≤ 0.1 |
| Ni | ≤ 1.0 |
| Mo | ≤ 1.0 |

and the sums of Ti + Nb + V and Cr + Mo+ Ni are restricted to:

| Ti + Nb + V | 0.02 - 0.13 |
|-------------|-------------|
| Cr + Mo+ Ni | 0.1 - 0.75 |

balance Fe apart from impurities

3. The hot rolled steel strip or sheet having a composition consisting of the following alloying elements (in wt. %):

| C | 0.03 - 0.09 |
|----|-------------|
| Si | 0.4 - 0.9 |
| Mn | 1.7 - 2.2 |
| Al | 0.001 - 0.10 |
| Ti | 0.02 - 0.10 |
| Cr | 0.15 - 0.7 |
| Cu | 0.001 - 0.10 |
| B | 0.002 - 0.004 |

Optionally

| Nb | ≤ 0.1 |
|----|-------|
| V | ≤ 0.1 |
| Ni | ≤ 1.0 |
| Mo | ≤ 1.0 |

and the sums of Ti + Nb + V and Cr + Mo+ Ni are restricted to:

| Ti + Nb + V | 0.02 - 0.10 |
|-------------|-------------|
| Cr + Mo+ Ni | 0.20 - 0.70 |

balance Fe apart from impurities.

4. The hot rolled steel strip or sheet according to any one of the preceding claims, wherein the tensile strength is 1000 - 1140 MPa.

5. The hot rolled steel strip or sheet according to any one of the preceding claims, wherein the microstructure comprising (in vol. %):

| martensite | ≥ 90 |
|------------|------|
| lower bainite + tempered martensite | ≤ 5 |
| retained austenite | ≤ 5 |
| ferrite, pearlite, upper bainite, cementite | ≤ 5 |

6. The hot rolled steel strip or sheet according to any one of claim 1-5, wherein the microstructure is free of MnS inclusions.

7. A method for producing the hot rolled steel strip or sheet according to any one of claim 1-6:
the method comprising the steps of:

   a) making steel slabs according to the composition;
   b) reheating the slabs to a reheating temperature **(TRH)** between 1200 °C and 1300 °C at a heating rate of 0.05 - 10 °C/s;
   c) hot rolling the slabs in austenitic range to a hot rolled strip having a final thickness **(t)** of 2 - 5 mm, wherein the hot rolling finishing temperature **(FRT)** is within the range of 850 to 900 °C;
   d) cooling the hot rolled strip at cooling rate **(CR)** of at least 55 °C/s down to a cooling stop temperature **(CS)** lower than 200 °C; and
   e) coiling the cooled strip at a coiling temperature **(CT)** lower than 200 °C.

8. The method according to claim 7, wherein the hot rolling finishing temperature **(FRT)** is within the range of 860 to 890 °C, preferably 865 to 880 °C.

9. The method according to claim 7 or 8, wherein the cooling rate **(CR)** is at least 60 °C/s, preferably at least 70 °C/s.

Europäisches
Patentamt

European
Patent Office

Office européen
des brevets

# EUROPEAN SEARCH REPORT

**Application Number**

EP 24 15 3488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/304121 A1 (WANG HUANRONG [CN] ET AL) 28 September 2023 (2023-09-28) <br> * claims 1-20 * <br> * tables 1-4 * <br> * paragraphs [0008] - [0070] * <br> ----- | 1-9 | INV. <br> C22C38/58 <br> C22C38/02 <br> C22C38/06 <br> C22C38/50 <br> C22C38/46 |
| A | US 2022/177996 A1 (HEMMILÄ MIKKO [FI] ET AL) 9 June 2022 (2022-06-09) <br> * claims 1-14 * <br> * paragraphs [0008] - [0105] * <br> * tables 1-3 * <br> ----- | 1-9 | C22C38/48 <br> C22C38/44 <br> C22C38/42 <br> C22C38/54 <br> C22C38/00 <br> C22C38/38 |
| A | US 2019/316222 A1 (SCHULZ THOMAS [DE] ET AL) 17 October 2019 (2019-10-17) <br> * claims 38-74 * <br> * paragraphs [0019] - [0232] * <br> ----- | 1-9 | C22C38/28 <br> C22C38/32 <br> C22C38/20 <br> C21D9/46 <br> C21D8/02 |
| A | US 2017/275719 A1 (WANG HUANRONG [CN] ET AL) 28 September 2017 (2017-09-28) <br> * tables 1-8 * <br> * tables 1-3 * <br> * paragraphs [0006] - [0056] * <br> ----- | 1-9 | C21D6/00 |
| A,D | WO 2023/132254 A1 (NIPPON STEEL CORP [JP]) 13 July 2023 (2023-07-13) <br> * claims 1-7 * <br> * tables 1-4 * <br> * paragraphs [0006] - [0092] * <br> ----- | 1-9 | **TECHNICAL FIELDS SEARCHED (IPC)** <br><br> C22C <br> C21D <br> B32B |

The present search report has been drawn up for all claims

| Place of search | Date of completion of the search | Examiner |
|---|---|---|
| The Hague | 28 June 2024 | Vlassi, Eleni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 15 3488

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | C21D1/18<br>B32B15/01 |

**TECHNICAL FIELDS SEARCHED    (IPC)**

The present search report has been drawn up for all claims

| Place of search | Date of completion of the search | Examiner |
|---|---|---|
| The Hague | 28 June 2024 | Vlassi, Eleni |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .................................................................................
& : member of the same patent family, corresponding
    document

## ANNEX TO THE EUROPEAN SEARCH REPORT
## ON EUROPEAN PATENT APPLICATION NO.

EP 24 15 3488

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| US 2023304121 A1 | 28-09-2023 | CN 114107794 A | 01-03-2022 |
| | | EP 4206355 A1 | 05-07-2023 |
| | | JP 2023539647 A | 15-09-2023 |
| | | KR 20230059807 A | 03-05-2023 |
| | | US 2023304121 A1 | 28-09-2023 |
| | | WO 2022042729 A1 | 03-03-2022 |
| US 2022177996 A1 | 09-06-2022 | BR 112021019860 A2 | 07-12-2021 |
| | | BR 112021019865 A2 | 07-12-2021 |
| | | CA 3135141 A1 | 08-10-2020 |
| | | CA 3135144 A1 | 08-10-2020 |
| | | CN 113785078 A | 10-12-2021 |
| | | CN 113785079 A | 10-12-2021 |
| | | EP 3719148 A1 | 07-10-2020 |
| | | EP 3719149 A1 | 07-10-2020 |
| | | JP 2022528420 A | 10-06-2022 |
| | | KR 20210149123 A | 08-12-2021 |
| | | PL 3719148 T3 | 08-05-2023 |
| | | SI 3719148 T1 | 30-06-2023 |
| | | US 2022177996 A1 | 09-06-2022 |
| | | US 2022177997 A1 | 09-06-2022 |
| | | WO 2020201437 A1 | 08-10-2020 |
| | | WO 2020201438 A1 | 08-10-2020 |
| US 2019316222 A1 | 17-10-2019 | CN 107208232 A | 26-09-2017 |
| | | DE 102014017274 A1 | 19-05-2016 |
| | | EP 3221483 A1 | 27-09-2017 |
| | | KR 20170084210 A | 19-07-2017 |
| | | RU 2017120860 A | 19-12-2018 |
| | | US 2019316222 A1 | 17-10-2019 |
| | | WO 2016078644 A1 | 26-05-2016 |
| US 2017275719 A1 | 28-09-2017 | CA 2962472 A1 | 31-03-2016 |
| | | CN 105506494 A | 20-04-2016 |
| | | JP 6466573 B2 | 06-02-2019 |
| | | JP 2017533345 A | 09-11-2017 |
| | | RU 2017121061 A | 17-12-2018 |
| | | US 2017275719 A1 | 28-09-2017 |
| | | WO 2016045266 A1 | 31-03-2016 |
| WO 2023132254 A1 | 13-07-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2801637 B1
- EP 3584337 B1

- WO 2023132254 A1

### Non-patent literature cited in the description

- *Proc. Int. Conf. on TRIP-aided high strength ferrous alloys*, 2002, 61-64